# EUROPEAN PATENT APPLICATION

(11) **EP 4 776 363 A1**
(43) Date of publication of application: **15.07.2026**
(21) Application number: 25864610.8
(22) Date of filing: 30.09.2025
(51) Int. Cl.: H01M 10/04, H01M 50/105

(54) **DEGASSING DEVICE FOR POUCH-TYPE SECONDARY BATTERY AND DEGASSING METHOD FOR POUCH-TYPE SECONDARY BATTERY USING SAME**

(30) Priority: 12.11.2024 KR 20240160462
(71) Applicant: LG ENERGY SOLUTION, LTD., Seoul 07335 (KR)
(72) Inventor: KIM, Eun Sik, Daejeon 34122 (KR); LEE, Seung Byung, Daejeon 34122 (KR); PARK, Ah Ram, Daejeon 34122 (KR); LEE, Yong Tae, Daejeon 34122 (KR)
(74) Representative: Goddar, Heinz J.
(86) International application number: PCT/KR2025/015541
(87) International publication number: WO 2026/106106

(57) **Abstract**

Disclosed are a pouch-shaped secondary battery degassing apparatus for removing gas from a pouch-shaped secondary battery including a first pocket portion configured to receive an electrode assembly and a second pocket portion configured to capture gas, the pouch-shaped secondary battery degassing apparatus including a first jig unit located at one surface of the second pocket portion, the first jig unit being configured to take in gas captured in the second pocket portion, and a second jig unit located at the other surface of the second pocket portion, the second jig unit being configured to take in the gas captured in the second pocket portion, wherein the first jig unit includes a first support plate, a first intake portion, and a first suction portion, and the first support plate is formed such that a region thereof where the first intake portion is located protrudes farther toward the one surface of the second pocket portion than a region thereof where the first suction portion is located, and a pouch-shaped secondary battery degassing method using the same.

## Description

### [Technical Field]

This application claims the benefit of priority to Korean Patent Application No. 10-2024-0160462 filed on November 12, 2024, the disclosure of which is incorporated herein by reference in its entirety.

The present invention relates to a pouch-shaped secondary battery degassing apparatus and a pouch-shaped secondary battery degassing method using the same, and more particularly to a pouch-shaped secondary battery degassing apparatus capable of preventing the discharge of electrolyte received in a pouch-shaped secondary battery upon removal of gas generated during a process of activating the pouch-shaped secondary battery and a pouch-shaped secondary battery degassing method using the same.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

A typical pouch-shaped secondary battery manufacturing method includes a process of inserting an electrode assembly into a receiving space of a battery case made of a laminate sheet, a process of injecting electrolyte into the battery case, a process of sealing the battery case, and an activation process.

Meanwhile, during the activation process, a large amount of gas is generated due to chemical reaction and side reaction between the electrolyte and the electrode, and in order to capture the gas, the battery case is provided with a space for gas capture in addition to a space in which the electrode assembly is received.

In addition, the typical pouch-shaped secondary battery manufacturing method includes a degassing process of discharging gas generated during the activation process after the activation process is completed.

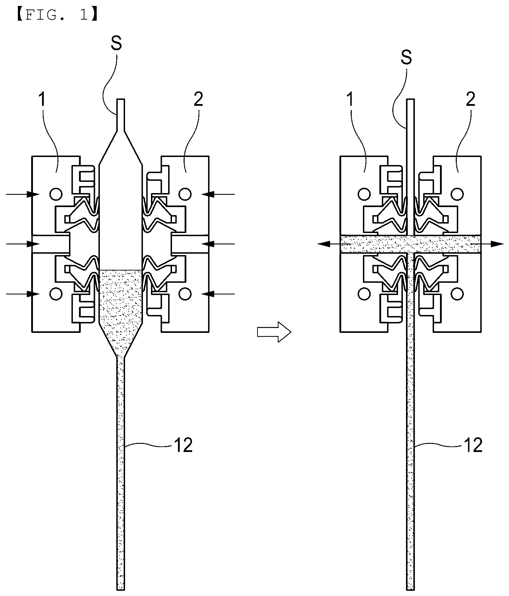

In this regard, FIG. 1 is a view illustrating a conventional pouch-shaped secondary battery degassing apparatus.

As shown in FIG. 1, a first intake portion 1 and a second intake portion 2 located respectively at one surface and the other surface of a second pocket portion 12 for gas capture press the second pocket portion 12 from both sides, and take in gas captured in the second pocket portion 12 through a hole formed in the second pocket portion 12, thereby discharging the gas.

During the process of taking in the gas captured in the second pocket portion 12 through the first intake portion 1 and the second intake portion 2, however, a phenomenon in which electrolyte received in the pouch-shaped secondary battery is discharged along with the gas may occur, which causes a problem of degrading the performance of the secondary battery due to electrolyte shortage.

### (Prior Art Document)

(Patent Document 1) Korean Patent Application Publication No. 10-2018-0062839

### [Disclosure]

### [Technical Problem]

The present invention has been made in view of the above problems, and it is an object of the present invention to provide a pouch-shaped secondary battery degassing apparatus capable of preventing the discharge of electrolyte during a degassing process and a pouch-shaped secondary battery degassing method using the same.

### [Technical Solution]

As a technical means for achieving the above object, a pouch-shaped secondary battery degassing apparatus according to an embodiment of the present invention, which is a degassing apparatus for removing gas from a pouch-shaped secondary battery (10) including a first pocket portion (11) configured to receive an electrode assembly and a second pocket portion (12) configured to capture gas, includes a first jig unit (100) located at one surface of the second pocket portion (12), the first jig unit (100) being configured to take in gas captured in the second pocket portion (12), and a second jig unit (200) located so as to correspond to the first jig unit (100), the second jig unit being located at the other surface of the second pocket portion (12), the second jig unit being configured to take in the gas captured in the second pocket portion (12), wherein the first jig unit (100) includes a first support plate (110), a first intake portion (120) configured to take in the gas captured in the second pocket portion (12), and a first suction portion (130) located under the first intake portion (120), the first suction portion being configured to suction a lower side of the one surface of the second pocket portion (12), and the first support plate (110) is formed such that a region thereof where the first intake portion (120) is located protrudes farther toward the one surface of the second pocket portion (12) than a region thereof where the first suction portion (130) is located.

Also, in the pouch-shaped secondary battery degassing apparatus according to the embodiment of the present invention, the first intake portion (120) may include a first piercing unit (121) configured to form a venting hole (12a) in the one surface of the second pocket portion (12), a first pad (122) having a first hole (122a) in which the first piercing unit (121) is disposed, the first pad protruding so as to be closer to the one surface of the second pocket portion (12) than to one surface of the first support plate (110), and a first sealing portion (123) configured to seal the circumference of the venting hole (12a).

Also, in the pouch-shaped secondary battery degassing apparatus according to the embodiment of the present invention, the first support plate (110) may be provided with a first intake channel (111) communicating with the first hole (122a), the first intake channel being configured to take in the gas captured in the second pocket portion (12).

Also, in the pouch-shaped secondary battery degassing apparatus according to the embodiment of the present invention, the first jig unit (100) may further include a first intake unit (140) communicating with the first intake channel (111).

Also, in the pouch-shaped secondary battery degassing apparatus according to the embodiment of the present invention, the first suction portion (130) may include a plurality of first suction holes (131) formed to vacuum-suction the lower side of the one surface of the second pocket portion (12) and a second pad (132) disposed at the one surface of the first support plate (110) so as to surround the circumferences of the plurality of first suction holes (131).

Also, in the pouch-shaped secondary battery degassing apparatus according to the embodiment of the present invention, the first support plate (110) may be provided with a second intake channel (112) communicating with the plurality of first suction holes (131), the second intake channel being configured to vacuum-suction the lower side of the one surface of the second pocket portion (12), and the first jig unit (100) may further include a first suction unit (150) communicating with the second intake channel (112).

Also, in the pouch-shaped secondary battery degassing apparatus according to the embodiment of the present invention, the second jig unit (200) may include a second support plate (210), a second intake portion (220) configured to take in the gas captured in the second pocket portion (12), and a second suction portion (230) located under the second intake portion (220), the second suction portion being configured to suction a lower side of the other surface of the second pocket portion (12), wherein the second support plate (210) may be formed such that a region thereof where the second intake portion (200) is located protrudes farther toward the other surface of the second pocket portion (12) than a region thereof where the second suction portion (230) is located.

Also, in the pouch-shaped secondary battery degassing apparatus according to the embodiment of the present invention, the second intake portion (220) may include a second piercing unit (221) configured to form a venting hole (12a) in the other surface of the second pocket portion (12), a third pad (222) having a second hole (222a) in which the second piercing unit (221) is disposed, the third pad protruding so as to be closer to the other surface of the second pocket portion (12) than to one surface of the second support plate (210), and a third sealing portion (223) configured to seal the circumference of the venting hole (12a).

Also, in the pouch-shaped secondary battery degassing apparatus according to the embodiment of the present invention, the second support plate (210) may be provided with a third intake channel (211) communicating with the second hole (222a), the third intake channel being configured to take in the gas captured in the second pocket portion (12).

Also, in the pouch-shaped secondary battery degassing apparatus according to the embodiment of the present invention, the second jig unit (200) may further include a second intake unit (240) communicating with the third intake channel (211).

Also, in the pouch-shaped secondary battery degassing apparatus according to the embodiment of the present invention, the second suction portion (230) may include a plurality of second suction holes (231) formed to vacuum-suction the lower side of the other surface of the second pocket portion (12) and a fourth pad (232) disposed at the one surface of the second support plate (210) so as to surround the circumferences of the plurality of second suction holes (231).

Also, in the pouch-shaped secondary battery degassing apparatus according to the embodiment of the present invention, the second support plate (210) may be provided with a fourth intake channel (212) communicating with the plurality of second suction holes (231), the fourth intake channel being configured to vacuum-suction the lower side of the other surface of the second pocket portion (12), and the second jig unit (200) may further include a second suction unit (250) communicating with the fourth intake channel (212).

Also, in the pouch-shaped secondary battery degassing apparatus according to the embodiment of the present invention, the first sealing portion (123) may be formed so as to protrude toward the one surface of the second pocket portion (12), and the second sealing portion (223) may be formed so as to be depressed inward such that the first sealing portion (123) is inserted thereinto.

In addition, a pouch-shaped secondary battery degassing method using the pouch-shaped secondary battery degassing apparatus according to the embodiment of the present invention includes (S1) locating a second pocket portion (12) between the first jig unit (100) and the second jig unit (200), (S2) pressing the first jig unit (100) and the second jig unit (200) against the second pocket portion (12) to form a venting hole (12a), (S3) spreading the second pocket portion (12) to both sides through the first jig unit (100) and the second jig unit (200), and (S4) taking in gas captured in the second pocket portion (12) through the first jig unit (100) and the second jig unit (200).

Also, the pouch-shaped secondary battery degassing method according to the embodiment of the present invention may further include sealing the circumference of the venting hole (12a) through the first jig unit (100) and the second jig unit (200)after step (S4).

### [Advantageous Effects]

As is apparent from the above description, in a pouch-shaped secondary battery degassing apparatus according to the present invention and a pouch-shaped secondary battery degassing method using the same, a first intake portion is disposed at one surface of a second pocket portion to take in gas, a first suction portion is located under the first intake portion to suction a lower side of one surface of the second pocket portion, and the first intake portion takes in gas captured in the second pocket portion in the state in which the first suction portion secures an inner space of the second pocket portion such that electrolyte remains, whereby it is possible to prevent a phenomenon in which the electrolyte is discharged.

Also, in the pouch-shaped secondary battery degassing apparatus according to the present invention and the pouch-shaped secondary battery degassing method using the same, the first intake portion is provided so as to protrude closer to the second pocket portion than the first suction portion, whereby it is possible for the first suction portion to secure the inner space of the second pocket portion even when the first intake portion takes in gas while pressing the second pocket portion.

### [Description of Drawings]

FIG. 1 is a view illustrating a conventional degassing apparatus.
FIG. 2 is a view illustrating a pouch-shaped secondary battery.
FIG. 3 is a perspective view illustrating a pouch-shaped secondary battery degassing apparatus according to the present invention.
FIG. 4 is a perspective view illustrating a first jig unit of the pouch-shaped secondary battery degassing apparatus according to the present invention.
FIG. 5 is a plan view illustrating the first jig unit of the pouch-shaped secondary battery degassing apparatus according to the present invention.
FIG. 6 is a perspective view illustrating a second jig unit of the pouch-shaped secondary battery degassing apparatus according to the present invention.
FIG. 7 is a plan view illustrating the second jig unit of the pouch-shaped secondary battery degassing apparatus according to the present invention.
FIG. 8 is a conceptual view illustrating the operation of the pouch-shaped secondary battery degassing apparatus according to the present invention.
FIG. 9 is a side view illustrating the pouch-shaped secondary battery degassing apparatus according to the present invention.
FIG. 10 is a side view illustrating a piercing operation of the pouch-shaped secondary battery degassing apparatus according to the present invention.
FIG. 11 is a side view illustrating a gas intake operation of the pouch-shaped secondary battery degassing apparatus according to the present invention.
FIG. 12 is a side view illustrating a sealing operation of the pouch-shaped secondary battery degassing apparatus according to the present invention.

### [Best Mode]

Now, preferred embodiments of the present invention will be described in detail with reference to the accompanying drawings such that the preferred embodiments of the present invention may be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

Hereinafter, a pouch-shaped secondary battery degassing apparatus according to the present invention and a pouch-shaped secondary battery degassing method using the same will be described.

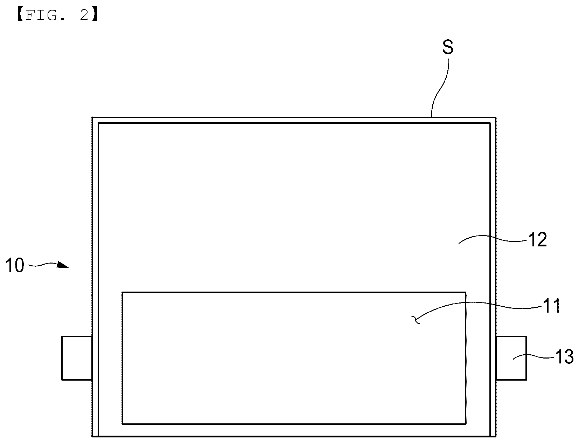

First, referring to FIG. 2, which is a view illustrating a pouch-shaped secondary battery, the pouch-shaped secondary battery 10 includes an electrode assembly (not shown) having a pair of electrode leads 13 located opposite each other or located side by side in the same direction, a first pocket portion 11 configured to receive the electrode assembly (not shown), and a second pocket portion 12 configured to capture gas.

The first pocket portion 11 is filled with electrolyte, and a sealed portion S is formed at an upper edge of the second pocket portion 12, used as an electrolyte injection port, by thermal fusion.

In the pouch-shaped secondary battery, each of the first pocket portion 11 and the second pocket portion 12 is formed using a laminate sheet including an outer covering layer, a metal layer, and an inner covering layer.

The inner covering layer is in direct contact with the electrode assembly, and therefore the inner covering layer must exhibit high insulation properties and high electrolytic resistance. In addition, the inner covering layer must exhibit high sealability in order to hermetically isolate the battery from the outside, i.e., a thermally-bonded sealed portion between inner layers must exhibit excellent thermal bonding strength.

The inner covering layer may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

The metal layer, which abuts the inner covering layer, corresponds to a barrier layer configured to prevent moisture or various gases from permeating into the battery from the outside. An aluminum thin film, which is lightweight and easily shapeable, may be used as a preferred material for the metal layer.

The outer covering layer is provided at the other surface of the metal layer, and the outer covering layer may be made of a heat-resistant polymer that exhibits excellent tensile strength, resistance to moisture permeation, and resistance to air transmission such that the outer covering layer exhibits high heat resistance and chemical resistance while protecting the electrode assembly. As an example, the outer covering layer may be made of nylon or polyethylene terephthalate; however, the present invention is not limited thereto.

The electrode assembly (not shown) received in the first pocket portion 11 may be a jelly-roll type electrode assembly, which is configured to have a structure in which a long sheet type negative electrode and a long sheet type positive electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other; however, the present invention is not limited thereto.

The positive electrode includes a positive electrode current collector and a positive electrode active material applied to each of an upper surface and a lower surface of the positive electrode current collector. The positive electrode active material may be mixed with a conductive agent and a binder, and a filler may be further added if necessary.

The negative electrode includes a negative electrode current collector and a negative electrode active material applied to each of an upper surface and a lower surface of the negative electrode current collector. The negative electrode active material may be further mixed with a conductive agent and a binder, and the negative electrode current collector may be coated with the mixture.

The separator prevents short circuit between the negative electrode and the positive electrode and allows only migration of lithium ions. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

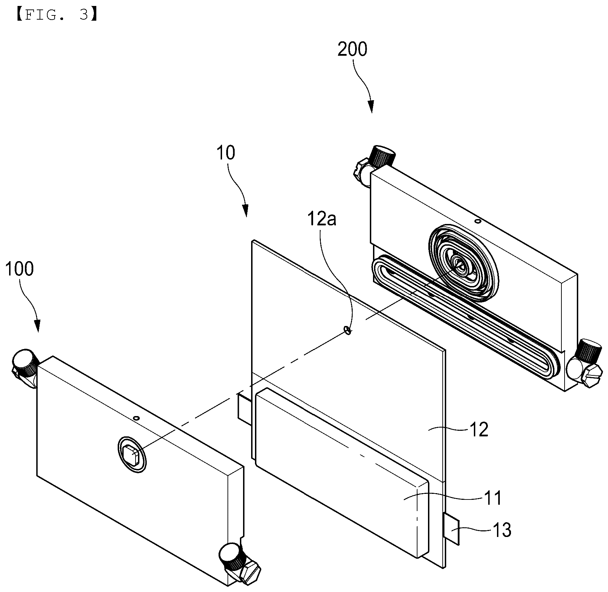

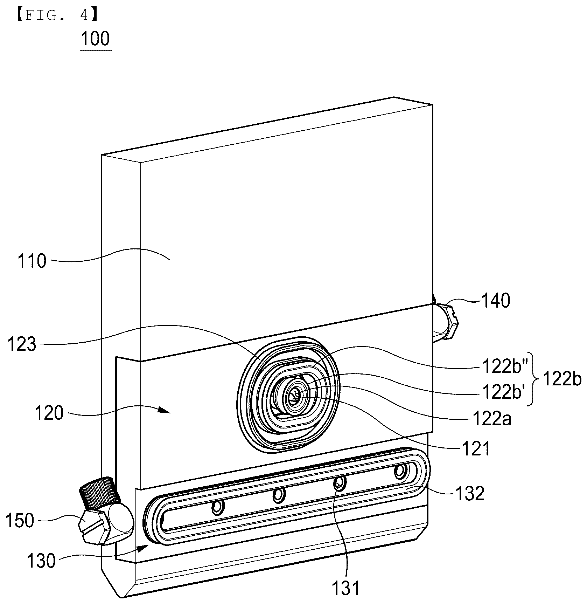

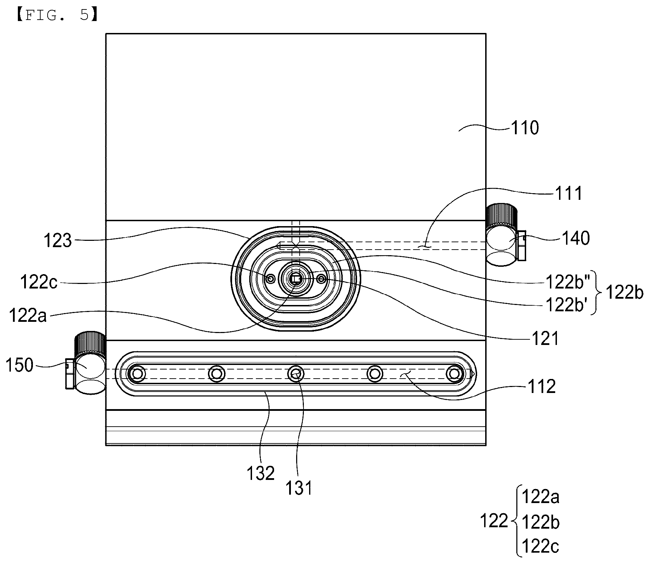

FIG. 3 is a perspective view illustrating a pouch-shaped secondary battery degassing apparatus according to the present invention, FIG. 4 is a perspective view illustrating a first jig unit of the pouch-shaped secondary battery degassing apparatus according to the present invention, and FIG. 5 is a plan view illustrating the first jig unit of the pouch-shaped secondary battery degassing apparatus according to the present invention.

Referring to FIGs. 2 to 5, the degassing apparatus for removing gas from the pouch-shaped secondary battery 10 having the aforementioned configuration includes a first jig unit 100 and a second jig unit 200.

In order to intake the gas captured in the second pocket portion 12, the first jig unit 100 may be located at one surface of the second pocket portion 12 (8 o'clock position in FIG. 3), and the second jig unit 200 may be located at the other surface of the second pocket portion 12 (2 o'clock position in FIG. 3).

First, the first jig unit 100 will be described in detail. The first jig unit 100 may include a first support plate 110, a first intake portion 120, a first suction portion 130, a first intake unit 140, and a first suction unit 150.

The first support plate 110 is configured to support the first intake portion 120 and the first suction portion 130. The first intake portion 120 may be disposed at an upper part of one surface of the first support plate 110 (12 o'clock position in FIG. 4), and the first suction portion 130 may be disposed at a lower part of one surface of the first support plate 110 (6 o'clock position in FIG. 4). Here, one surface of the first support plate 110 is a surface facing one surface of the second pocket portion 12.

In addition, the first support plate 110 may be formed such that the region thereof where the first intake portion 120 is located protrudes farther toward one surface of the second pocket portion 12 than the region thereof where the first suction portion 130 is located. In other words, the upper part of one surface of the first support plate 110 where the first intake portion 120 is located may be formed so as to protrude farther toward the second pocket portion 12 than the lower part of one surface of the first support plate where the first suction portion 130 is located.

The first support plate 110 may be provided with a first intake channel 111 which communicates with the first intake portion 120 and into which the gas captured in the second pocket portion 12 is taken through the first intake portion 120 and a second intake channel 112 which communicates with the first suction portion 130 and vacuum-suctions a lower side of one surface of the second pocket portion 12, a detailed description of which will follow.

The first intake portion 120 may be disposed at an upper side of one surface of the first support plate 110 to take in the gas captured in the second pocket portion 12. The first intake portion 120 may include a first piercing unit 121, a first pad 122, and a first sealing portion 123.

The first piercing unit 121 may be disposed at one surface of the first support plate 110 so as to face the second pocket portion 12, and may be configured to form a venting hole 12a in one surface of the second pocket portion 12. For example, when the first jig unit 100 moves toward the second pocket portion 12, the first piercing unit 121 may come into contact with one surface of the second pocket portion 12 and penetrate one surface of the second pocket portion 12 to form the venting hole 12a.

In this case, the first piercing unit 121 may be a pin member or knife member with a pointed end; however, the present invention is not limited thereto, and any piercing member obvious to those skilled in the art may be used.

The first pad 122 may be disposed so as to protrude closer to one surface of the second pocket portion 12 than to one surface of the first support plate 110, and may form a first hole 122a in which the first piercing unit 121 is disposed.

The first hole 122a may take in the gas from the venting hole 12a formed in the second pocket portion 12 by the first piercing unit 121. The first hole 122a may communicate with the first intake channel 111 of the first support plate 110.

For example, the first piercing unit 121 is disposed in the first hole 122a, and the venting hole 12a is formed in one surface of the second pocket portion 12 by the first piercing unit 121. In addition, the venting hole 12a and the first hole 122a may be located so as to correspond to each other, whereby the first hole 122a may more efficiently take in the gas captured in the second pocket portion 12 from the venting hole 12a.

In addition, the first pad 122 includes a first protruding pad 122b disposed so as to protrude from one surface of the first support plate 110, wherein the first protruding pad 122b may be formed so as to surround the circumference of the first hole 122a.

The first protruding pad 122b may partition the region surrounding the venting hole 12a in order to more efficiently take in (vent) the gas discharged through the venting hole 12a. For example, the first protruding pad 122b may be in tight contact with the region of the second pocket portion 12 around the venting hole 12a such that an inner region of the first protruding pad 122b is sealed, whereby it is possible to more efficiently take in the gas captured in the second pocket portion 12 during vacuum intake.

For example, one surface of the first protruding pad 122b in contact with the second pocket portion 12 may be formed as a ring-shaped pad, and an elastic member (e.g., a spring member) having elastic force may be connected to a rear surface of the ring-shaped pad. In this configuration, when pressure is applied to the first protruding pad 122b, the first protruding pad may be compressed rearward by the elastic member. As another example, the first protruding pad 122b may be provided as a pad made of an elastic material.

In addition, the first protruding pad 122b may include a 1a protruding pad 122b' formed closer to the first hole 122a and a 1b protruding pad 122b" formed farther from the first hole 122a. The dual-type first protruding pad 122b may enhance the sealing force of the region around the venting hole 12a.

In addition, a first fastening hole 122c may be formed in a depressed region formed between the 1a protruding pad 122b' and the 1b protruding pad 122b" to couple the first pad 122 to one surface of the first support plate 110. At this time, the first fastening hole 122c may be coupled to one surface of the first support plate 110 via a fastening member (not shown).

The first sealing portion 123 may be formed outside the first protruding pad 122b and may be configured to seal the circumference of the venting hole 12a formed by the first piercing unit 121. The first sealing portion 123 may be formed at one surface of the first support plate 110 so as to protrude toward the second pocket portion 12.

The first sealing portion 123 may be provided as a heating block configured to thermally seal a part of the second pocket portion 12; however, the present invention is not limited thereto, and the first sealing portion 123 may be in contact with the second sealing portion 223, a description of which will follow, to deform a part of the second pocket portion 12 in order to seal the circumference of the venting hole 12a. A more detailed description thereof will follow.

The first suction portion 130, located under the first intake portion 120, may be disposed at the lower side of one surface of the first support plate 110 to suction the lower side of one surface of the second pocket portion 12. The first suction portion 130 may include a first suction hole 131 and a second pad 132.

The first suction hole 131 may communicate with the second intake channel 112 of the first support plate 110, and may be provided in plural so as to vacuum-suction the lower side of one surface of the second pocket portion 12. The first suction holes 131 may communicate with each other via the second intake channel 112.

The plurality of first suction holes 131 may be configured to vacuum-suction one surface of the second pocket portion 12 on the lower side of the region where the venting hole 12a is formed.

In addition, the second pad 132 may be disposed at one surface of the first support plate 110 so as to protrude therefrom, and may be formed so as to surround the circumferences of the plurality of first suction holes 131.

The second pad 132 may partition the regions around the plurality of first suction holes 131 in order to more efficiently suction the lower side of one surface of the second pocket portion 12 through the plurality of first suction holes 131. For example, the second pad 132 may be in tight contact with the lower side of one surface of the second pocket portion 12 such that an inner region of the second pad 132 is sealed, whereby it is possible to more efficiently suction the lower region of one surface of the second pocket portion 12 during vacuum intake.

For example, one surface of the second pad 132 in contact with the second pocket portion 12 may have a ring-shaped pad, and an elastic member (e.g., a spring member) having elastic force may be connected to a rear surface of the ring-shaped pad. In this configuration, when pressure is applied to the second pad 132, the second pad may be compressed rearward by the elastic member. As another example, the second pad 132 may be provided as a pad made of an elastic material.

In this case, the first suction portion 130 is located farther rearward of the second pocket portion 12 than the first intake portion 120 due to the shape of the first support plate 110, and even when the first intake portion 120 presses the second pocket portion 12 while taking in the gas captured in the second pocket portion 12, it is possible to secure an inner space such that the electrolyte does not rise toward the venting hole 12a but remains retained in the inner space, since the first suction portion 130 is located farther rearward than the first intake portion 120.

Meanwhile, the first intake unit 140 may communicate with the first intake channel 111 formed in the first support plate 110. More specifically, the first intake unit 140 may be connected to the other end of the first intake channel 111 communicating with the first hole 122a, and may be configured to take in gas captured in the second pocket portion 12 through the first hole 122a.

In addition, the first suction unit 150 may communicate with the second intake channel 112 formed in the first support plate 110. More specifically, the first suction unit 150 may be connected to the other end of the second intake channel 112 communicating with the plurality of first suction holes 131, and may be configured to suction the lower side of one surface of the second pocket portion 12 through the plurality of first suction holes 131.

The first intake unit 140 and the first suction unit 150 may be configured in a vacuum suction structure. Since this structure is known in the art, a more detailed description thereof will be omitted.

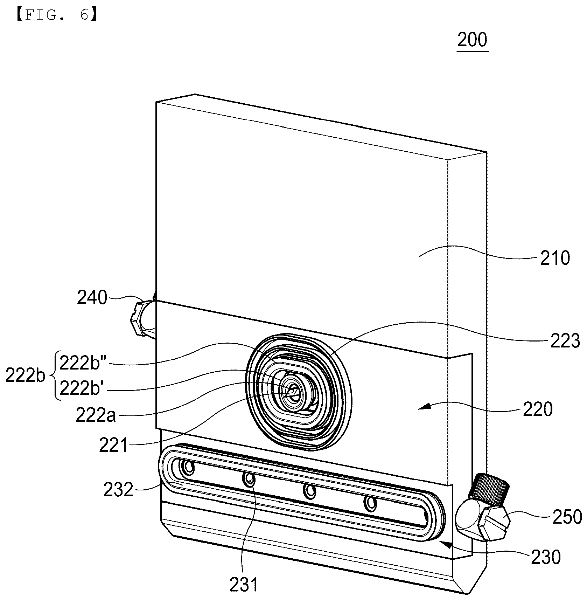

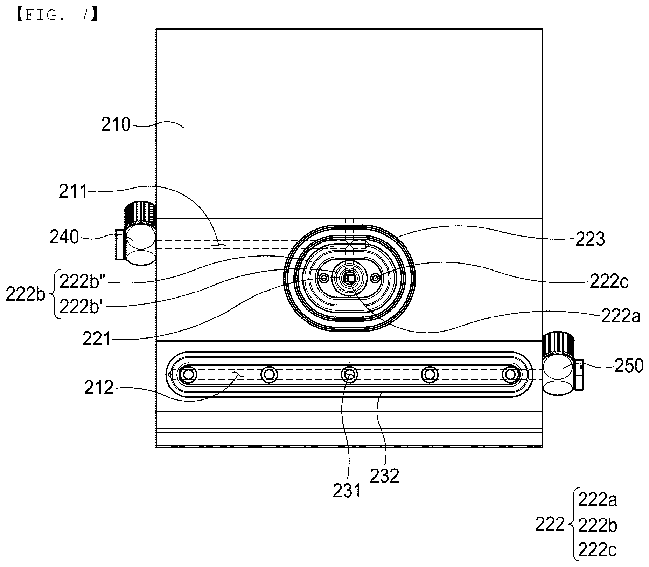

FIG. 6 is a perspective view illustrating the second jig unit of the pouch-shaped secondary battery degassing apparatus according to the present invention, and FIG. 7 is a plan view illustrating the second jig unit of the pouch-shaped secondary battery degassing apparatus according to the present invention.

Referring to FIGs. 2 to 7, the second jig unit 200 may include a second support plate 210, a second intake portion 220, a second suction portion 230, a second intake unit 240, and a second suction unit 250.

The second support plate 210 is configured to support the second intake portion 220 and the second suction portion 230. The second intake portion 220 may be disposed at an upper part of one surface of the second support plate 210 (12 o'clock position in FIG. 6), and the second suction portion 230 may be disposed at a lower part of one surface of the second support plate 210 (6 o'clock position in FIG. 6). Here, one surface of the second support plate 210 is a surface facing the opposite surface of the second pocket portion 12.

In addition, the second support plate 210 may be formed such that the region thereof where the second intake portion 220 is located protrudes farther toward the other surface of the second pocket portion 12 than the region thereof where the second suction portion 230 is located. In other words, the upper part of the other surface of the second support plate 210 where the second intake portion 220 is located may be formed so as to protrude farther toward the second pocket portion 12 than the lower part of the other surface of the first support plate where the second suction portion 2330 is located.

The second support plate 210 may be provided with a third intake channel 211 which communicates with the second intake portion 220 and into which the gas captured in the second pocket portion 12 is taken through the second intake portion 220 and a fourth intake channel 212 which communicates with the second suction portion 230 and vacuum-suctions a lower side of the other surface of the second pocket portion 12, a detailed description of which will follow.

The second intake portion 220 may be disposed at the upper side of one surface of the second support plate 210 to take in the gas captured in the second pocket portion 12. The second intake portion 220 may include a second piercing unit 221, a third pad 222, and a second sealing portion 223.

The second piercing unit 221 may be disposed at one surface of the second support plate 210 so as to face the second pocket portion 12, and may be configured to form a venting hole 12a in the other surface of the second pocket portion 12. For example, when the second jig unit 200 moves toward the second pocket portion 12, the second piercing unit 221 may come into contact with the other surface of the second pocket portion 12 and penetrate the other surface of the second pocket portion 12 to form the venting hole 12a.

In this case, the second piercing unit 221 may be a pin member or knife member with a pointed end; however, the present invention is not limited thereto, and any piercing member obvious to those skilled in the art may be used.

The third pad 222 may be disposed so as to protrude closer to the other surface of the second pocket portion 12 than to one surface of the second support plate 210, and may form a second hole 222a in which the second piercing unit 221 is disposed.

The second hole 222a may take in the gas from the venting hole 12a formed in the second pocket portion 12 by the second piercing unit 221. The second hole 222a may communicate with the third intake channel 211 of the second support plate 210.

For example, the second piercing unit 221 may be disposed in the second hole 222a, and the venting hole 12a may be formed in the other surface of the second pocket portion 12 by the second piercing unit 221. In addition, the venting hole 12a and the second hole 222a may be located so as to correspond to each other, whereby the second hole 222a may more efficiently take in the gas captured in the second pocket portion 12 from the venting hole 12a.

In addition, the third pad 222 includes a second protruding pad 222b disposed so as to protrude from one surface of the second support plate 210, wherein the second protruding pad 222b may be formed so as to surround the circumference of the second hole 222a.

The second protruding pad 222b may partition the region surrounding the venting hole 12a in order to more efficiently take in (vent) the gas discharged through the venting hole 12a. For example, the second protruding pad 222b may be in tight contact with the region of the second pocket portion 12 around the venting hole 12a such that an inner region of the second protruding pad 222b is sealed, whereby it is possible to more efficiently take in the gas captured in the second pocket portion 12 during vacuum intake.

For example, one surface of the second protruding pad 222b in contact with the second pocket portion 12 may be formed as a ring-shaped pad, and an elastic member (e.g., a spring member) having elastic force may be connected to a rear surface of the ring-shaped pad. In this configuration, when pressure is applied to the second protruding pad 222b, the second protruding pad may be compressed rearward by the elastic member. As another example, the second protruding pad 222b may be provided as a pad made of an elastic material.

In addition, the second protruding pad 222b may include a 2a protruding pad 222b' formed closer to the second hole 222a and a 2b protruding pad 222b" formed farther from the second hole 222a. The dual-type second protruding pad 222b may enhance the sealing force of the region around the venting hole 12a.

In addition, a second fastening hole 222c may be formed in a depressed region formed between the 2a protruding pad 222b' and the 2b protruding pad 222b" to couple the third pad 222 to one surface of the second support plate 210. At this time, the second fastening hole 222c may be coupled to one surface of the second support plate 210 via a fastening member (not shown).

The second sealing portion 223 may be formed outside the second protruding pad 222b and may be configured to seal the circumference of the venting hole 12a formed by the second piercing unit 221. The second sealing portion 223 may be formed at one surface of the second support plate 210 110 so as to protrude toward the second pocket portion 12, and a part of the second sealing portion may be formed so as to be depressed inward such that a protruding part of the first sealing portion 123 is inserted thereinto.

The first sealing portion 123 may be formed so as to protrude toward the second pocket portion 12, and the second sealing portion 123 may be formed so as to be depressed inward such that the first sealing portion 123 is inserted thereinto, whereby the second pocket portion 12 located between the first sealing portion 123 and the second sealing portion 223 may be sealed while being crimpled so as to correspond to the interlocking shape of the first sealing portion 123 and the second sealing portion 223.

The second sealing portion 223 may be provided as a heating block configured to thermally seal a part of the second pocket portion 12; however, the present invention is not limited thereto.

The second suction portion 230, located under the second intake portion 220, may be disposed at the lower side of one surface of the second support plate 210 to suction the lower side of the other surface of the second pocket portion 12. The second suction portion 230 may include a second suction hole 231 and a fourth pad 232.

The second suction hole 231 may communicate with the fourth intake channel 212 of the second support plate 210, and may be provided in plural so as to vacuum-suction the lower side of the other surface of the second pocket portion 12. The second suction holes 231 may communicate with each other via the fourth intake channel 212.

The plurality of second suction holes 231 may be configured to vacuum-suction the other surface of the second pocket portion 12 on the lower side of the region where the venting hole 12a is formed.

In addition, the fourth pad 232 may be disposed at one surface of the second support plate 210 so as to protrude therefrom, and may be formed so as to surround the circumferences of the plurality of second suction holes 231.

The fourth pad 232 may partition the regions around the plurality of second suction holes 231 in order to more efficiently suction the lower side of the other surface of the second pocket portion 12 through the plurality of second suction holes 231. For example, the fourth pad 232 may be in tight contact with the lower side of the other surface of the second pocket portion 12 such that an inner region of the fourth pad 232 is sealed, whereby it is possible to more efficiently suction the lower region of the other surface of the second pocket portion 12 during vacuum intake.

For example, one surface of the fourth pad 232 in contact with the second pocket portion 12 may have a ring-shaped pad, and an elastic member (e.g., a spring member) having elastic force may be connected to a rear surface of the ring-shaped pad. In this configuration, when pressure is applied to the fourth pad 232, the fourth pad may be compressed rearward by the elastic member. As another example, the fourth pad 232 may be provided as a pad made of an elastic material.

In this case, the second suction portion 230 is located farther rearward of the second pocket portion 12 than the second intake portion 220 due to the shape of the second support plate 210, and even when the second intake portion 1220 presses the second pocket portion 12 while taking in the gas captured in the second pocket portion 12, it is possible to secure an inner space such that the electrolyte does not rise toward the venting hole 12a but remains retained in the inner space, since the second suction portion 230 is located farther rearward than the second intake portion 20.

Meanwhile, the second intake unit 240 may communicate with the third intake channel 211 formed in the second support plate 210. More specifically, the second intake unit 240 may be connected to the other end of the third intake channel 211 communicating with the second hole 222a, and may be configured to take in gas captured in the second pocket portion 12 through the second hole 222a.

In addition, the second suction unit 250 may communicate with the fourth intake channel 212 formed in the second support plate 210. More specifically, the second suction unit 250 may be connected to the other end of the fourth intake channel 212 communicating with the plurality of second suction holes 231, and may be configured to suction the lower side of the other surface of the second pocket portion 12 through the plurality of second suction holes 231.

The second intake unit 240 and the second suction unit 250 may be configured in a vacuum suction structure. Since this structure is known in the art, a more detailed description thereof will be omitted.

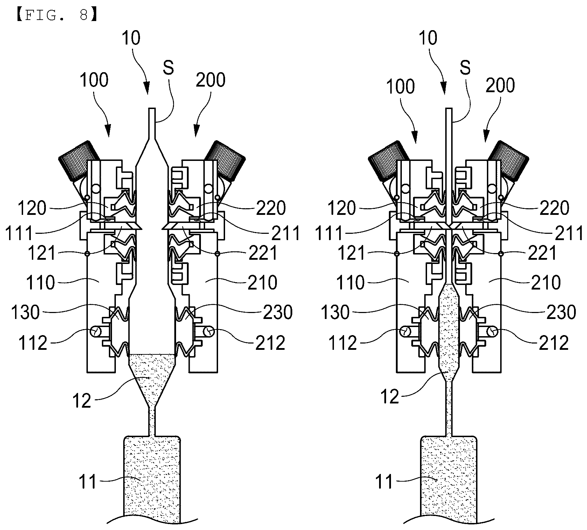

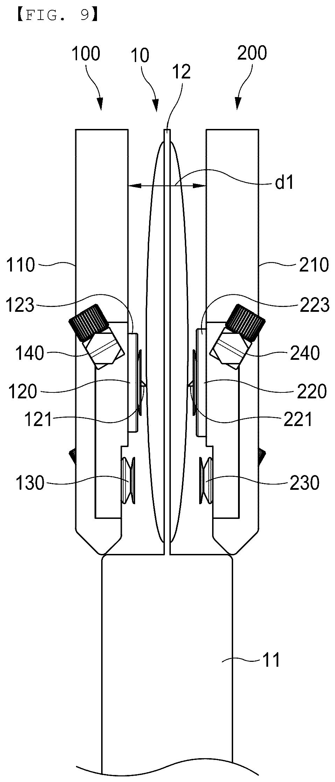

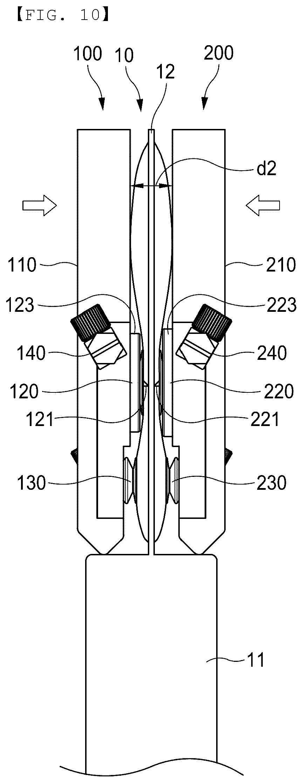

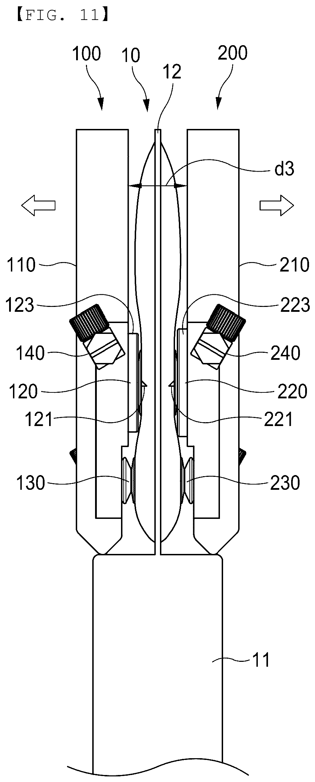

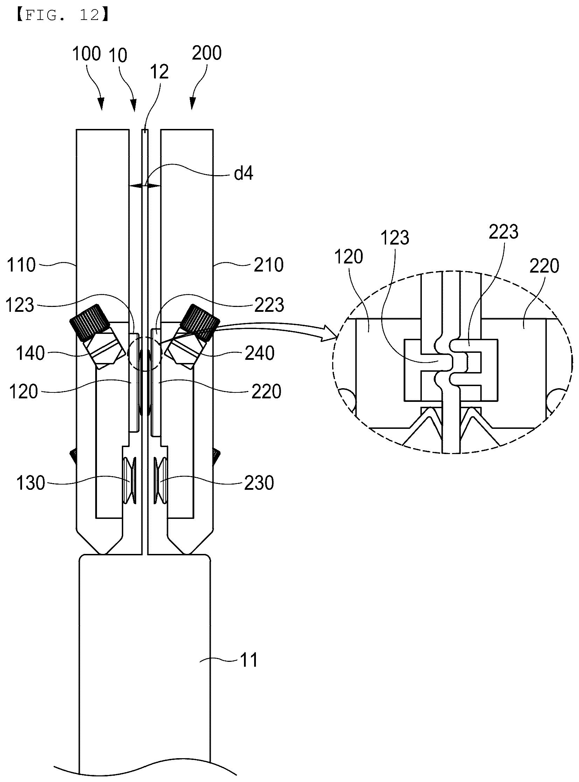

FIG. 8 is a conceptual view illustrating the operation of the pouch-shaped secondary battery degassing apparatus according to the present invention, FIG. 9 is a side view illustrating the pouch-shaped secondary battery degassing apparatus according to the present invention, and FIG. 10 is a side view illustrating a piercing operation of the pouch-shaped secondary battery degassing apparatus according to the present invention. In addition, FIG. 11 is a side view illustrating a gas intake operation of the pouch-shaped secondary battery degassing apparatus according to the present invention, and FIG. 12 is a side view illustrating a sealing operation of the pouch-shaped secondary battery degassing apparatus according to the present invention.

Referring to FIGs. 2 to 12, a pouch-shaped secondary battery degassing method according to the present invention using the pouch-shaped secondary battery degassing apparatus having the aforementioned configuration includes (S1) a step of locating a second pocket portion 12 between the first jig unit 100 and the second jig unit 200, (S2) pressing the first jig unit 100 and the second jig unit 200 against the second pocket portion 12 to form a venting hole 12a, (S3) a step of spreading the second pocket portion 12 to both sides through the first jig unit 100 and the second jig unit 200, and (S4) a step of taking in gas captured in the second pocket portion 12 through the first jig unit 100 and the second jig unit 200.

In step (S2), the first jig unit 100 and the second jig unit 200 are pressed against the second pocket unit 12, and may form the venting hole 12a in one surface and the other surface of the second pocket portion 12 through the first piercing unit 121 and the second piercing unit 221.

Furthermore, in step (S2), the first jig unit 100 and the second jig unit 200 may suction a part of the first surface of the second pocket portion 12 and a part of the second surface of the second pocket portion 12 through the first intake portion 120 and the first suction portion 130 and through the second intake portion 220 and the second suction portion 230, respectively.

Furthermore, in step (S3), the first jig unit 100 and the second jig unit 200 may be moved rearward while suctioning one surface and the other surface of the second pocket portion 12, respectively, to spread the second pocket portion 12 to both sides.

In step (S4), the first jig unit 100 and the second jig unit 200 may take in the gas captured in the second pocket portion 12 through the first intake portion 120 and the second intake portion 220 while pressing the second pocket portion 12. At this time, the first suction portion 130 and the second suction portion 230 are located farther rearward of the second pocket portion 12 than the first intake portion 120 and the second intake portion 220, respectively, whereby electrolyte may not rise toward the venting hole 12a, instead remaining in the pouch-shaped secondary battery 10 due to an inner space formed by the first suction portion 130 and the second suction portion 230.

In addition, after step (S4), a step of sealing the circumference of the venting hole 12a through the first jig unit 100 and the second jig unit 200 may be performed. At this time, the distance between the first jig unit 100 and the second jig unit 200 may be decreased by sealing of the venting hole 12a, a part of the first piercing unit 121 may be inserted a part into the second hole 222a through the venting hole 12a, and a part of the second piercing unit 221 may be inserted a part into the first hole 122a through the venting hole 12a.

The distance between the first jig unit 100 and the second jig unit 200 may be decreased in order of step (S1), step (S3), step (S4), step (S2), and the sealing step after step (S4) (d1>d3>d2>d4).

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

| | | | |
|---|---|---|---|
| 10: | Pouch-shaped secondary battery | | |
| 11: | First pocket portion | | |
| 12: | Second pocket portion | 12a: | Venting hole |
| 13: | Electrode lead | | |
| 100: | First jig unit | | |
| 110: | First support plate | | |
| 111: | First intake channel | 112: | Second intake channel |
| 120: | First intake portion | | |
| 121: | First piercing unit | | |
| 122: | First pad | | |
| 122a: | First hole | | |
| 122b: | First protruding pad | | |
| 122b': | 1a protruding pad | 122b": | 1b protruding pad |
| 122c: | First fastening hole | | |
| 123: | First sealing portion | | |
| 130: | First suction portion | | |
| 131: | First suction hole | 132: | Second pad |
| 140: | First intake unit | | |
| 150: | First suction unit | | |
| 200: | Second jig unit | | |
| 210: | Second support plate | | |
| 211: | Third intake channel | 212: | Fourth intake channel |
| 220: | Second intake portion | | |
| 221: | Second piercing unit | | |
| 222: | Third pad | | |
| 222a: | Second hole | | |
| 222b: | Second protruding pad | | |
| 222b': | 2a protruding pad | 222b": | 2b protruding pad |
| 222c: | Second fastening hole | | |
| 223: | Second sealing portion | | |
| 230: | Second suction portion | | |
| 231: | Second suction hole | 232: | Fourth pad |
| 240: | Second intake unit | | |
| 250: | Second suction unit | | |
| S: | Sealed portion | | |

## Claims

1. A pouch-shaped secondary battery degassing apparatus for removing gas from a pouch-shaped secondary battery comprising a first pocket portion configured to receive an electrode assembly and a second pocket portion configured to capture gas, the pouch-shaped secondary battery degassing apparatus comprising:
a first jig unit located at one surface of the second pocket portion, the first jig unit being configured to take in gas captured in the second pocket portion; and
a second jig unit located so as to correspond to the first jig unit, the second jig unit being located at the other surface of the second pocket portion, the second jig unit being configured to take in the gas captured in the second pocket portion, wherein
the first jig unit comprises a first support plate, a first intake portion configured to take in the gas captured in the second pocket portion, and a first suction portion located under the first intake portion, the first suction portion being configured to suction a lower side of the one surface of the second pocket portion, and
the first support plate is formed such that a region thereof where the first intake portion is located protrudes farther toward the one surface of the second pocket portion than a region thereof where the first suction portion is located.

2. The pouch-shaped secondary battery degassing apparatus according to claim 1, wherein the first intake portion comprises:
a first piercing unit configured to form a venting hole in the one surface of the second pocket portion;
a first pad having a first hole in which the first piercing unit is disposed, the first pad protruding so as to be closer to the one surface of the second pocket portion than to one surface of the first support plate; and
a first sealing portion configured to seal a circumference of the venting hole.

3. The pouch-shaped secondary battery degassing apparatus according to claim 2, wherein the first support plate is provided with a first intake channel communicating with the first hole, the first intake channel being configured to take in the gas captured in the second pocket portion.

4. The pouch-shaped secondary battery degassing apparatus according to claim 3, wherein the first jig unit further comprises a first intake unit communicating with the first intake channel.

5. The pouch-shaped secondary battery degassing apparatus according to claim 2, wherein the first suction portion comprises:
a plurality of first suction holes formed to vacuum-suction the lower side of the one surface of the second pocket portion; and
a second pad disposed at the one surface of the first support plate so as to surround circumferences of the plurality of first suction holes.

6. The pouch-shaped secondary battery degassing apparatus according to claim 5, wherein
the first support plate is provided with a second intake channel communicating with the plurality of first suction holes, the second intake channel being configured to vacuum-suction the lower side of the one surface of the second pocket portion, and
the first jig unit further comprises a first suction unit communicating with the second intake channel.

7. The pouch-shaped secondary battery degassing apparatus according to claim 2, wherein
the second jig unit comprises:
a second support plate;
a second intake portion configured to take in the gas captured in the second pocket portion; and
a second suction portion located under the second intake portion, the second suction portion being configured to suction a lower side of the other surface of the second pocket portion, and
the second support plate is formed such that a region thereof where the second intake portion is located protrudes farther toward the other surface of the second pocket portion than a region thereof where the second suction portion is located.

8. The pouch-shaped secondary battery degassing apparatus according to claim 7, wherein the second intake portion comprises:
a second piercing unit configured to form a venting hole in the other surface of the second pocket portion;
a third pad having a second hole in which the second piercing unit is disposed, the third pad protruding so as to be closer to the other surface of the second pocket portion than to one surface of the second support plate; and
a third sealing portion configured to seal a circumference of the venting hole.

9. The pouch-shaped secondary battery degassing apparatus according to claim 8, wherein the second support plate is provided with a third intake channel communicating with the second hole, the third intake channel being configured to take in the gas captured in the second pocket portion.

10. The pouch-shaped secondary battery degassing apparatus according to claim 9, wherein the second jig unit further comprises a second intake unit communicating with the third intake channel.

11. The pouch-shaped secondary battery degassing apparatus according to claim 7, wherein the second suction portion comprises:
a plurality of second suction holes formed to vacuum-suction the lower side of the other surface of the second pocket portion; and
a fourth pad disposed at the one surface of the second support plate so as to surround circumferences of the plurality of second suction holes.

12. The pouch-shaped secondary battery degassing apparatus according to claim 11, wherein
the second support plate is provided with a fourth intake channel (212) communicating with the plurality of second suction holes, the fourth intake channel being configured to vacuum-suction the lower side of the other surface of the second pocket portion, and
the second jig unit further comprises a second suction unit communicating with the fourth intake channel.

13. The pouch-shaped secondary battery degassing apparatus according to claim 8, wherein
the first sealing portion is formed so as to protrude toward the one surface of the second pocket portion, and
the second sealing portion is formed so as to be depressed inward such that the first sealing portion is inserted thereinto.

14. A pouch-shaped secondary battery degassing method using the pouch-shaped secondary battery degassing apparatus according to any one of claims 1 to 13, the pouch-shaped secondary battery degassing method comprising:
(S1) locating a second pocket portion between the first jig unit and the second jig unit;
(S2) pressing the first jig unit and the second jig unit against the second pocket portion to form a venting hole;
(S3) spreading the second pocket portion to both sides through the first jig unit and the second jig unit; and
(S4) taking in gas captured in the second pocket portion through the first jig unit and the second jig unit.

15. The pouch-shaped secondary battery degassing method according to claim 14, further comprising sealing a circumference of the venting hole through the first jig unit and the second jig unit after step (S4).
